# EUROPÄISCHE PATENTSCHRIFT

(11) **EP 0 815 380 B1**
(45) Veröffentlichungstag und Bekanntmachung des Hinweises auf die Patenterteilung: **11.11.1998**
(21) Anmeldenummer: 96905744.7
(22) Anmeldetag: 14.03.1996
(51) Int. Cl.: F16N 31/00, B09B 3/00

(54) **VERFAHREN UND VORRICHTUNG ZUM ABLASSEN EINES BETRIEBSMITTELS**
PROCESS AND DEVICE FOR DRAINING FUEL AND LUBRICANT
PROCEDE ET DISPOSITIF POUR RETIRER UN LUBRIFIANT OU UN CARBURANT

(30) Priorität: 20.03.1995 DE 19510105
(43) Veröffentlichungstag der Anmeldung: 07.01.1998
(73) Patentinhaber: Lindner, Anton, 83131 Nussdorf (DE)
(72) Erfinder: ESSENPREIS, Marcus, D-85716 Unterschleissheim (DE)
(86) Internationale Anmeldenummer: DE9600474
(87) Internationale Veröffentlichungsnummer: WO9629536

(56) Entgegenhaltungen:
- DE-U- 9 207 055
- GB-A- 2 178 415
- US-A- 2 841 245
- US-A- 2 899 019
- US-A- 3 196 982
- US-A- 3 973 549
- US-A- 4 763 620

## Beschreibung

Die Erfindung bezieht sich auf ein Verfahren zum Ablassen eines Betriebsmittels aus einem Aggregat eines Kraftfahrzeuges nach dem Oberbegriff des Anspruchs 1.

Beim Ablassen beispielsweise von Öl aus dem nicht betriebswarmen Motor oder Getriebe eines Kraftfahrzeuges stellt sich allgemein das Problem, daß das Öl, vor allem bei niedrigen Außentemperaturen, verhältnismäßig zähflüssig ist und innerhalb einer vorgegebenen Zeit nicht in ausreichendem Maße aus dem Fahrzeugaggregat ausfließt. Während bei betriebsbereiten Kraftfahrzeugen nach Möglichkeit ein Ölwechsel im betriebswarmen Zustand vorgenommen wird, besteht diese Möglichkeit bei der Entsorgung und Demontage von Altfahrzeugen nicht mehr.

Moderne Fahrzeugdemontagestraßen für das Recycling von Altfahrzeugen beginnen mit der "Trockenlegung" eines Fahrzeuges, das heißt dem Ablassen der Betriebsmittel vor der eigentlichen Demontage. Diese Trockenlegung findet meist auf einem dafür speziell ausgebildeten Arbeitsplatz statt. Hierzu werden die Ablaßöffnungen der Fahrzeugaggregate über entsprechend groß dimensionierten Entsorgungsbehältern geöffnet, so daß der Großteil der Betriebsmittel aus den Fahrzeugaggregaten ausfließen kann. Bei Fahrzeugaggregaten ohne Ablaßöffnungen werden durch Aufschneiden, Durchbohren oder Durchstechen Ablaßöffnungen geschaffen. Nach einer vorgegebenen Zeit werden die Ablaßöffnungen wieder verschlossen, um ein Abtropfen der Betriebsmittel während der weiteren Demontage zu verhindern.

Ein solches Verfahren ist beispielsweise aus der EP 0 602 556 A2 bekannt. Zur Verringerung der Viskosität der Betriebsmittel (Getriebe-, Motorenöl) werden diese vor dem Ablassen erwärmt, was auf verschiedene Art und Weise geschehen kann. Hierdurch wird die in den Fahrzeugaggregaten verbleibende Restmenge an Betriebsmitteln verringert bzw. die Verweildauer an der Trockenlegungsstation verkürzt. Die Ablaßöffnungen werden auch bei diesem bekannten Verfahren wieder verschlossen, damit noch vorhandene Reste bei einem späteren Schwenken oder Drehen des Fahrzeuges nicht stören können.

Nachteilig bei den bekannten Verfahren ist, daß durch das Verschließen der Ablaßöffnungen der Anteil des während der Demontage nachfließenden Betriebsmittels im Fahrzeug verbleibt und somit eine nicht zu vernachlässigende Restmenge an Betriebsmitteln nicht aus der demontierten Restkarosserie entnommen werden kann. Hierdurch wird die umweltgerechte Entsorgung der Altfahrzeuge eingeschränkt. Wird zugunsten einer vollständigeren Entleerung der Fahrzeugaggregate die Ablaßöffnung nicht mehr verschlossen, so muß der Transport der Altfahrzeuge entlang der Demontagestraße über öldichten Bodenwannen oder einer ölfesten Bodenbeschichtung erfolgen. Dies bedingt hohe Investitionskosten und meist eine beträchtliche Verschmutzung des aufgefangenen Betriebsmittels. Außerdem kann unterhalb des Fahrzeugs nicht oder nur mit entsprechender Schutzkleidung gearbeitet werden.

Im Fall der EP-A1 wird zwar die in den Fahrzeugaggregaten verbleibende Restmenge an Betriebsmitteln verringert, jedoch entsteht durch die Erwärmung der Betriebsmittel ein großer Energiebedarf mit entsprechend hoher Umweltbelastung und hohen Betriebskosten.

Vorrichtungen zum Auffangen von Öl aus einem Kraftfahrzeug sind bereits aus der GB-A-2 178 415 und der US-A-2 841 245 bekannt. Die GB-A-2 178 415 zeigt dabei eine Auffangvorrichtung, die an ihrer dem Aggregat zugewandten Seite eine Öffnung aufweist und mit einer magnetischen Einrichtung versehen ist.

Die US-A-2 841 245 zeigt einen Auffangbehälter, der aus einem Hohlkörper mit einem nach außen abstehenden Verbindungselement zum Einsetzen in die Ablaßöffnung eines Aggregats versehen ist.

Aufgabe der Erfindung ist es, ein Verfahren und eine Vorrichtung zu schaffen, mit der bei geringem Zusatzaufwand und nahezu gleichbleibendem Zeitbedarf für die Betriebsstoffentnahme eine wesentlich verbesserte Entleerung betriebsmittelführender Fahrzeugaggregate bei der Trockenlegung von Altfahrzeugen erreicht wird.

Diese Aufgabe wird durch das Verfahren entsprechend den kennzeichnenden Merkmalen des Anspruchs 1 gelöst. Die Unteransprüche 4 bis 14 beschreiben erfindungsgemäße Vorrichtungen zur Durchführung dieses Verfahrens.

Wird nach Ablauf der Verweildauer an der Trockenlegungsstation der Demontagestraße der Auffangbehälter am Fahrzeugaggregat angebracht, so kann die weitere Demontagezeit in der Weise genutzt werden, daß weiterhin ein erheblicher Teil der Restmenge des im Fahrzeugaggregat verbliebenen Betriebsmittels langsam auslaufen kann. Während die Verweildauer an der Trockenlegungsstation in der Regel höchstens 20 Minuten beträgt, dauert die weitere Fahrzeugdemontage im Normalfall ein bis zwei Stunden, bei Zwischenlagerung der Altfahrzeuge deutlich länger. Hierdurch steht eine ausreichend lange Zeit zur Verfügung, um die in den Fahrzeugaggregaten verbleibende Restmenge an Betriebsmittel zu minimieren. Dies ist gerade während der kalten Jahreszeit und einer Fahrzeuglagerung im Freien von Bedeutung. Durch die Erschütterungen des Fahrzeuges entlang der Demontagestraße wird das Ausfließen des Betriebsmittels zudem erleichtert. Da die Demontage von Fahrzeugen im Gegensatz zur Trockenlegung in beheizten Gebäuden durchgeführt wird, erwärmt sich das Fahrzeug während der Demontage automatisch, so daß das Auslaufen des Betriebsmittel beschleunigt wird. Mit dem erfindungsgemäßen Verfahren kann durch den Einsatz des Auffangbehälters der Trockenlegungsgrad des Altfahrzeuges mit sehr geringem Zusatzaufwand weiter erhöht werden. Außerdem kann je nach Größe des Auffangbehälters die Verweildauer des Fahrzeuges auf dem Trockenlegungsplatz reduziert werden, wodurch die Gesamtdemontagezeit sinkt. Im allgemeinen wird man den Auffangbehälter jedoch relativ klein bemessen, damit er im weiteren Ablauf der Demontage nicht hinderlich ist.

Aus der DE 35 04 984 A1 ist zwar eine Motorölablaß- und -sammelvorrichtung mit einem Ölauffangbeutel bekannt. Im Unterschied zu dem vorliegenden erfindungsgemäßen Verfahren wird im Falle der DE-A1 der Beutel jedoch in Verbindung mit einem speziellen Ablaßventil dazu benutzt, die gesamte Ölmenge aus dem Fahrzeugaggregat abzulassen. Hierzu ist der Ölauffangbeutel mit einem Rohrstück versehen, das unter Überwindung einer Federkraft in das Ablaßventil eingeführt wird, wodurch das Ablaßventil geöffnet wird und das Öl abfließen kann. Die bekannte Vorrichtung ist für Fahrzeugbesitzer gedacht, die die Ölablaßschraube ihres Fahrzeug durch das Ablaßventil ersetzen, um Motorölwechsel in Zukunft selbst durchführen können. Für den vorliegenden Zweck, nämlich das einmalige Auffangen einer relativ geringen Menge von Restöl entlang einer Demontagestraße für Altfahrzeuge, ist die Vorrichtung hingegen wegen der hohen Kosten und des beträchtlichen Aufwands nicht geeignet. Die bekannte Ablaßvorrichtung ist zudem für die rauhen Einsatzbedingungen bei der Demontage von Altfahrzeugen nicht konzipiert.

Durch die Weiterbildung des Verfahrens nach Anspruch 2 und die entsprechende Vorrichtung nach Anspruch 4 steht eine denkbar einfache Befestigungsmöglichkeit des Auffangbehälters zur Verfügung, die bei allen Fahrzeugaggregaten aus ferromagnetischem Material verwendet werden kann. Als Magnete kommen sowohl Permanent- als auch Elektromagnete in Betracht. Entsprechend der unterschiedlichen Konturen der Fahrzeugaggregate-Unterseiten sind einige wenige unterschiedliche Auffangbehälter vorzusehen.

Während bei dem Verfahren nach Anspruch 2 der Auffangbehälter an die Unterseite des Fahrzeugaggregates angesetzt wird, wird gemäß Anspruch 3 der Auffangbehälter in die Ablaßöffnung des Aggregates eingesetzt und verschließt diese hierbei gleichzeitig, so daß ein seitliches Austreten des Betriebsmittels verhindert wird.

Die Ansprüche 5 bis 14 beschreiben Vorrichtungen für die Durchführung des Verfahrens nach Anspruch 3.

Eine besonders sichere und flüssigkeitsdichte Verbindung ergibt sich, wenn gemäß Anspruch 6 der Auffangbehälter in das Innengewinde der Ablaßöffnung eingeschraubt wird. Für die gängigen Gewinde von Ablaßöffnungen sind hierbei unterschiedliche Auffangbehälter vorzusehen.
Der Auffangbehälter nach Anspruch 7 zeichnet sich durch seinen stabilen Aufbau aus.
Mit dem Auffangbehälter nach Anspruch 8 ist es möglich, auch schwer zugängliche Ablaßöffnungen zu erreichen. Die Weiterbildung der Erfindung nach Anspruch 7 ermöglicht die schnelle Anbringung des Auffangbehälters auch an ungleichförmigen Ablaßöffnungen.
Auffangbehälter nach Anspruch 10 sind kostengünstig in der Herstellung.

Gemäß Anspruch 11 kann durch einfachen Austausch des Deckels und damit des Verbindungselements der Auffangbehälter an unterschiedlichen Ablaßöffnungen angepaßt werden.
Da die Auffangbehälter in der Regel glatte Außenflächen aufweisen, sind gemäß Anspruch 12 Einrichtungen zur Erleichterung der Handhabung vorgesehen, um den Auffangbehälter zum Aufgreifen, Einführen, Befestigen, Ablegen und Entleeren entsprechend gut führen zu können. Insbesondere sind hierfür Handgriffe vorgesehen. Derartige Handgriffe, mit denen der gesamte Auffangbehälter relativ zum Fahrzeugaggregat gedreht werden kann, sind an sich aus dem deutschen Gebrauchsmuster 72 40 087 bekannt.
Die Weiterbildung der Erfindung nach Anspruchh 13 ermöglicht das (maschinelle) Anschrauben des Auffangbehälters. Entlüftungsöffnungen gemäß Anspruch 14 erleichtern das Ausfließen des Betriebsmittels aus dem Fahrzeugaggregat ebenso wie das anschließende Entleeren des Auffangbehälters.

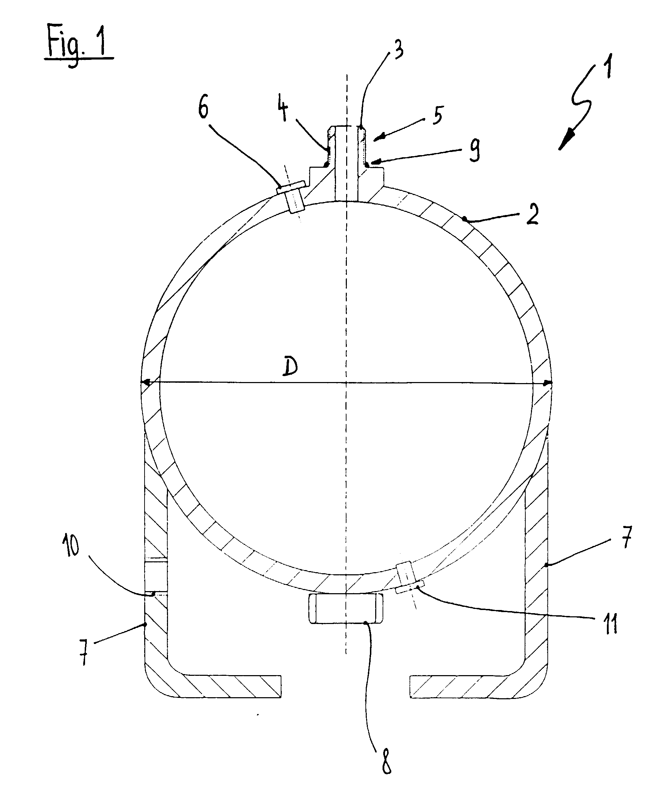

Mögliche Ausführungsbeispiele der Erfindung werden anhand der Zeichnung nachfolgend näher erläutert. Die Figuren 1 bis 4 zeigen unterschiedliche Ausführungsformen erfindungsgemäßer Auffangbehälter jeweils im Querschnitt.

Der in seiner Gesamtheit mit 1 bezeichnete Auffangbehälter besteht gemäß Figur 1 im wesentlichen aus einem kugelförmigen Hohlkörper 2 mit einem Außendurchmesser D von beispielsweise ca. 100 mm. Er kann z. B. aus Stahl, Aluminium oder Kunststoff gefertigt sein. Der Hohlkörper 2 des Auffangbehälters 1 ist mit einem hohlzylindrischen Rohrstutzen 3 versehen. Der Rohrstutzen 3 stellt die Einlauföffnung 5 für das aus dem Fahrzeugaggregat austretende Betriebsmittel dar. Über ein Außengewinde 4 am Rohrstutzen 3 kann der Auffangbehälter 1 in die nicht dargestellte Ablaßöffnung des Fahrzeugaggregates eingeschraubt werden. Um einen Volumenausgleich für das einlaufende Betriebsmittel zu erreichen, ist ein Entlüftungsventil 6 vorgesehen.
Handgriffe 7 erleichtern das Handling des Auffangbehälters 1. Das Einschrauben des Auffangbehälters 1 erfolgt entweder von Hand oder über ein Schraubwerkzeug, das auf den fest mit dem Hohlkörper 2 verbundenen Sechskant 8 aufgesetzt wird. Eine O-Ring-Dichtung 9 stellt sicher, daß die Verbindung zwischen dem Fahrzeugaggregat und dem Auffangbehälter 1 flüssigkeitsdicht ist. Ein aus der Schnittdarstellung des Auffangbehälters 1 nicht ersichtlicher Längsschlitz im Rohrstutzen 3 gewährleistet ein vollständiges Ablaufen des Betriebsmittels unabhängig von der Länge des in das Fahrzeugaggregat hineinragenden Rohrstutzens 3.

Die Trockenlegung eines Fahrzeugaggregates läuft wie folgt ab: Am Ende der Verweildauer des Altfahrzeuges an der Trockenlegungsstation wird der Auffangbehälter 1 in das Gewinde der Ablaßöffnung des Fahrzeugaggregates (vor allem Motor und Getriebe) eingeschraubt. Dies kann über die Handgriffe 7 oder über den Sechskant 8 erfolgen. Während des Durchlaufs durch die Demontagestraße bleibt der Auffangbehälter 1 so lange als möglich am Fahrzeug, so daß das zähflüssige Betriebsmittel weitestgehend aus dem Fahrzeugaggregat abfließen kann. Zur eventuellen Wiederverwedung kann die fahrzeugseitige Ablaßschraube in eine hierfür vorgesehene Haltevorrichtung 10 an einem der Handgriffe 7 eingesetzt werden. Nach dem Abschrauben des Auffangbehälters 1 vom Fahrzeugaggregat wird der Auffangbehälter 1 zur Entleerung um 180° gedreht, wobei das Betriebsmittel über die Einlauföffnung 5 wieder ausfließt. Der für das Ausfließen notwendige Volumenausgleich wird über ein weiteres Entlüftungsventil 11 bewerkstelligt.

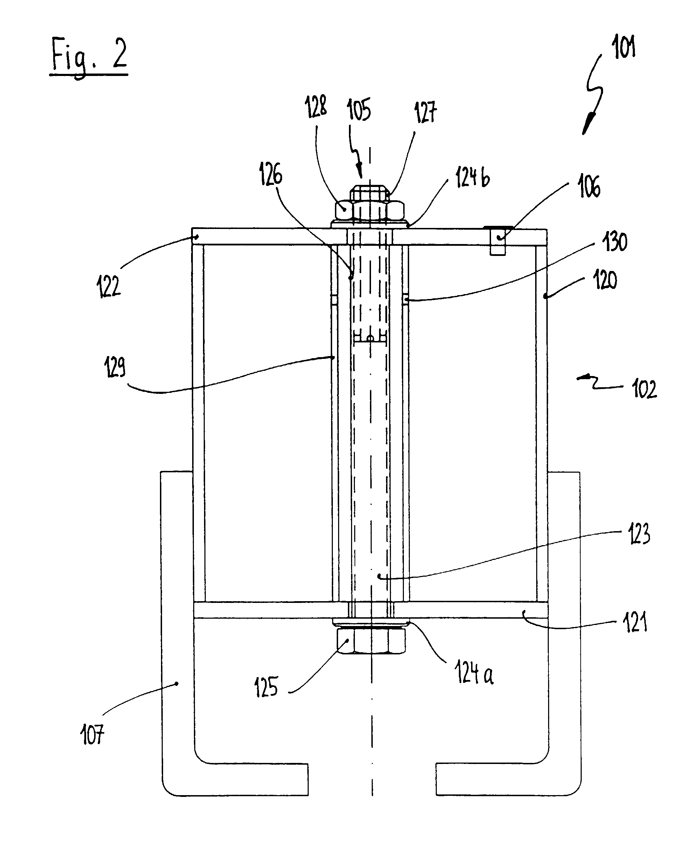

Das Ausführungsbeispiel der Figur 2 zeigt einen Auffangbehälter 101 mit einem zylinderförmigen Hohlkörper 102, der von einem rohrähnlichen Mantelteil 120 sowie einem Boden 121 und einem Deckel 122 gebildet wird. Boden 121 und Deckel 122 bestehen beispielsweise aus Kunststoff und sind mit dem ebenfalls in Kunststoff ausgeführten Mantelteil 120 verklebt. Eine Schraube 123 mit untergelegten Dichtscheiben 124a, b verspannt Boden 121 und Deckel 122 zusätzlich gegeneinander. Die Schraube 123 weist einen als Sechskant ausgebildeten Schraubenkopf 125 auf und ist an ihrem anderen Endabschnitt 126 hohl ausgebildet. Der Endabschnitt 126 trägt ein Außengewinde 127, das eine Mutter 128 aufnimmt. Die Schraube 123 ist im Inneren des Hohlkörpers 102 von einem Stützrohr 129 mit Durchtrittsöffnungen 130 umgeben. An der Außenfläche des Hohlkörpers 102 sind Handgriffe 107 angebracht. Ein Entlüftungsventil 106 im Deckel 122 dient dem Volumenausgleich.

Der Schraube 123 kommen mehrere Funktionen zu: zum einen erhöht sie die mechanische Belastbarkeit des Auffangbehälters 101, indem sie Boden 121 und Deckel 122 gegeneinander verspannt. Ferner dient der hohle Endabschnitt 126 als Einlauföffnung für das abzulassende Betriebsmittel. Die geringe freie Länge des Außengewindes 127 ermöglicht ein vollständiges Ablaufen des Betriebsmittels. Alternativ könnte der Endabschnitt 126 auch geschlitzt sein. Darüber hinaus wird durch die Schraube 123 das Problem der Anbringung eines Ansatzstückes für ein Verschraubungswerkzeug, z. B. durch Verklebung, umgangen. Gerade bei einem Hohlkörper 102 aus Kunststoff würde durch das Erfordernis einer hochbelastbaren Verklebung die Materialauswahl für den Kunststoff stark eingeschränkt.

Somit ergibt sich insgesamt ein Auffangbehälter 101, der kostengünstig herzustellen ist und sich durch Robustheit im praktischen Einsatz auszeichnet. Durch die Verwendung verschiedener Schrauben 123 mit unterschiedlichen Außengewinden können Auffangbehälter 101 für verschiedene Fahrzeugtypen flexibel und kostengünstig hergestellt werden.

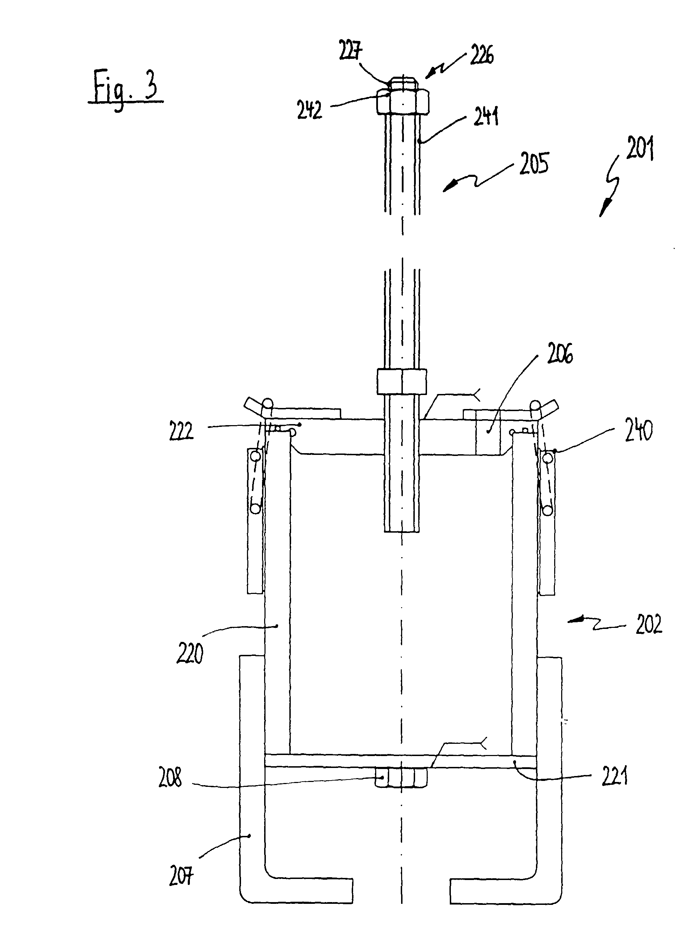

Der Auffangbehälter 201 gemäß Figur 3 besteht ebenfalls aus einem zylindrischen Hohlkörper 202 mit einem Mantelteil 220, einem Boden 221 sowie einem Deckel 222, der jedoch über einen Spannverschluß 240 mit Kniehebelmechanik lösbar mit dem Mantelteil 220 verbunden ist. In den Deckel 222 ist ein Metallschlauch 241 verdrehfest eingesetzt. Der Metallschlauch 241 weist an seinem Endabschnitt 226 ein Außengewinde 227 sowie eine Sechskantmutter 242 auf. Handgriffe 207, Sechskant 208 und Entlüftungsventil 206 sind analog den Figuren 1 und 2 vorgesehen.

Durch den Metallschlauch 241 ist es möglich, auch schwer zugängliche Ablaßöffnungen an Fahrzeugaggregaten zu erreichen. Das Einschrauben des Auffangbehälters 201 kann über den Sechskant 208 am Boden 211 des Auffangbehälters 201 erfolgen, da der Metallschlauch 241 ausreichend torsionssteif ist, um das geforderte Drehmoment übertragen zu können. Im Bedarfsfall kann über die Sechskantmutter 242 ein erhöhtes Drehmoment aufgebracht werden.
Der abnehmbare Deckel 222 ermöglicht ein schnelles Entleeren des Auffangbehälters 201 auch bei sehr zähflüssigen Betriebsmitteln. Außerdem kann durch mehrere Deckel 222 mit Metallschläuchen 241 mit unterschiedlichen Außengewinden 227 durch den einfachen und schnellen Austausch des Deckels 222 der Auffangbehälter 201 an Fahrzeugaggregate mit unterschiedlichen Innendurchmessern der Ablaßöffnungen angepaßt werden.

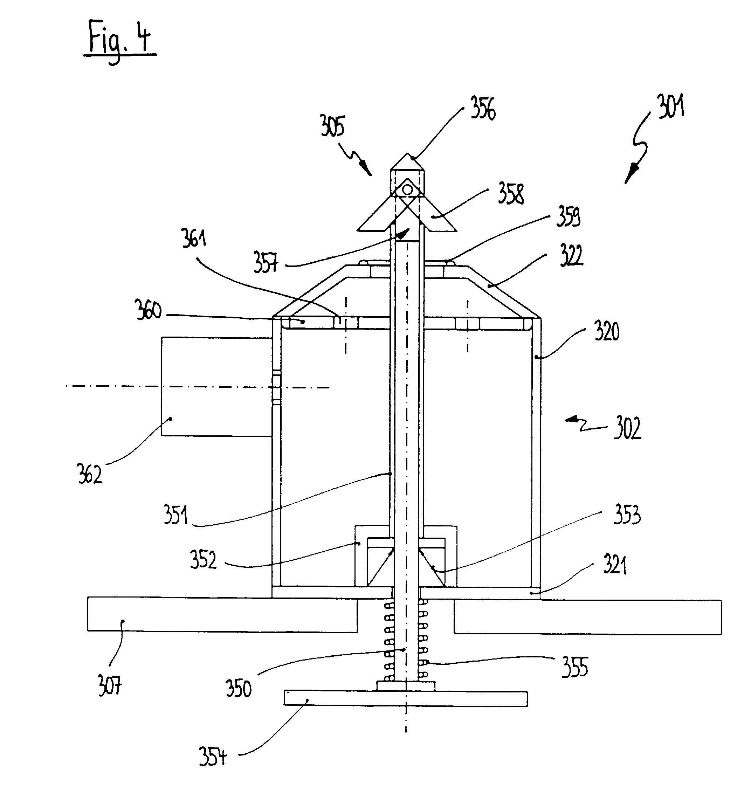

In Figur 4 ist ein weiteres Ausführungsbeispiel eines erfindungsgemäßen Auffangbehälters 301 gezeigt. Der Hohlkörper 302 setzt sich aus einem Mantelteil 320, einem Boden 321 sowie einem konischen Deckel 322 zusammen. Der Hohlkörper 302 wird von einer Hubstange 350 durchsetzt, die im Inneren des Auffangbehälters 301 durch ein Führungsrohr 351 geführt und über eine in einer Buchse 352 angeordnete Dichtung 353 abgedichtet ist. Die Hubstange 350 weist an ihrem einen Ende eine Druckplatte 354 auf, mit der sie entgegen der Kraft einer Druckfeder 355 aus dem Hohlkörper 302 herausverschoben werden kann. Das andere Ende der Hubstange 350 ist mit einer Zentrierspitze 356 sowie mit Abflachungen 357 für zwei Pendelplatten 358 versehen. Die Außenseite des Deckels 322 trägt einen Dichtring 359. Unterhalb des Deckels 322 ist eine Zwischenplatte 360 mit Durchflußbohrungen 361 angeordnet. In eine Entlüftungsöffnung 306 ist ein Aktivkohlefilter 362 eingeschraubt. Am Boden 321 des Auffangbehälters 301 sind Haltegriffe 307 angebracht.

Der Auffangbehälter 301 kann an unterschiedlich geformten Ablaßöffnungen befestigt werden. Er eignet sich insbesondere für die Anbringung an Ablaßöffnungen von Kraftstofftanks. Bei der Demontage von Altfahrzeugen werden Kraftstofftanks in der Regel durchstoßen, um den Kraftstoff abzulassen. Hierdurch entstehen ungleichförmige Ablaßöffnungen, die nur schwer gegen ausströmende Kraftstoffdämpfe abgedichtet werden können. Der erfindungsgemäß Auffangbehälter 301 ermöglicht es, diese Ablaßöffnung in einfacher Weise abzudichten. Somit können Restvolumina an Kraftstoff in einfacher und umweltfreundlicher Weise aufgefangen werden. Der in die Entlüftungsöffnung 306 eingesetzte Aktivkohlefilter 362 verhindert hierbei das Austreten von Kraftstoffdämpfen in die Umgebung. Bei Verwendung des Auffangbehälters 301 zum Auffangen von öl und ähnlichen Betriebsmitteln muß der Aktivkohlefilter 362 jedoch gegen ein Entlüftungsventil oder einen Verschlußstopfen ausgetauscht werden.

Zum Einsetzen des Auffangbehälters 301 in eine Ablaßöffnung eines Fahrzeugaggregates wird zunächst die Hubstange 350 in ihre Einführposition gebracht, indem die Druckplatte 354 zur Anlage an den Haltegriffen 307 gebracht wird. Die aufgrund ihrer Gewichtskraft in die Abflachungen 357 der Hubstange 350 eingeschwenkten Pendelplatten 358 behindern die Einführbewegung der Hubstangen 354 in die Ablaßöffnung nicht. Anschließend wird die Hubstange 350 durch die Kraft der Druckfeder 355 in ihre Ausgangsstellung zurückverlagert, wodurch die Pendelplatten 358 die in der Figur 4 gezeigte Spreizlage einnehmen.

## Patentansprüche

1. Verfahren zum Ablassen eines Betriebsmittels aus einem Aggregat eines Kraftfahrzeugs, wobei in einem ersten Schritt eine Ablaßöffnung des Aggregats geöffnet wird, so daß der überwiegende Teil des Betriebsmittels in einen Entsorgungsbehälter ausfließen kann, dadurch gekennzeichnet, daß in einem zweiten Schritt ein kleinvolumiger Auffangbehälter (1, 101, 201, 301) am Aggregat im Bereich der Ablaßöffnung befestigt wird, so daß eine Restmenge an Betriebsmittel über einen längeren Zeitraum in den Auffangbehälter (1, 101, 201, 301) ausfließen kann.

2. Verfahren nach Anspruch 1, dadurch gekennzeichnet, daß der Auffangbehälter über eine magnetische Halteeinrichtung am Aggregat befestigt wird.

3. Verfahren nach Anspruch 1, dadurch gekennzeichnet, daß der Auffangbehälter (1, 101, 201, 301) in die Ablaßöffnung des Aggregats formschlüssig eingesetzt wird.

4. Auffangbehälter zur Durchführung des Verfahrens nach Anspruch 1 und/oder 3, wobei der Auffangbehälter (1, 101, 201) ein Hohlkörper (2, 102, 202) mit einem nach außen abstehenden Verbindungselement (5, 105, 205) zum Einsetzen in die Ablaßöffnung des Aggregats ist, dadurch gekennzeichnet, daß das Verbindungselement (105, 205) mit einem Außengewinde (4, 127, 227) versehen ist, das in ein entsprechendes Innengewinde der Ablaßöffnung des Aggregats eingeschraubt werden kann.

5. Auffangbehälter nach Anspruch 4, dadurch gekennzeichnet, daß das Verbindungselement (5) von einem einstückig an den Hohlkörper (2) angeformten Rohrstutzen (3) gebildet wird.

6. Auffangbehälter nach Anspruch 4, dadurch gekennzeichnet, daß das Verbindungselement (105) eine den Hohlkörper (102) durchsetzende Schraube (123) ist, deren hohl ausgebildeter Endabschnitt (126) ein Außengewinde (127) zum Einschrauben in die Ablaßöffnung des Aggregates trägt.

7. Auffangbehälter nach Anspruch 4, dadurch gekennzeichnet, daß das Verbindungselement (205) von einem torsionssteifen Schlauch (241) gebildet wird, an dessen Endabschnitt (226) ein Außengewinde (227) zum Einschrauben in die Ablaßöffnung des Aggregats vorgesehen ist.

8. Auffangbehälter nach Anspruch 4, gekennzeichnet durch einen zylindrischen Hohlkörper (102, 202, 302), an dessen einer Stirnfläche (Deckel 122, 222, 322) das Verbindungselement (105, 205, 305) angeordnet ist.

9. Auffangbehälter nach Anspruch 8, dadurch gekennzeichnet, daß die Stirnfläche als abnehmbarer Deckel (322) ausgebildet ist.

10. Auffangbehälter nach wenigstens einem der Ansprüche 1 bis 9, dadurch gekennzeichnet, daß an der Außenfläche des Hohlkörpers (2, 102, 202, 302) wenigstens eine Einrichtung (Handgriff 7, 107, 207, 307) zur Handhabung des Auffangbehälters (1, 101, 201, 301) vorgesehen ist.

11. Auffangbehälter nach wenigstens einem der Ansprüche 4 bis 10, dadurch gekennzeichnet, daß an der Außenfläche des Hohlkörpers (2, 102, 202, 302) eine Einrichtung (8, 125, 208) zum Ansatz eines Verschraubungswerkzeugs vorgesehen ist.

12. Auffangbehälter nach wenigstens einem der vorangegangenen Ansprüche 4 bis 11, dadurch gekennzeichnet, daß der Auffangbehälter (1, 101, 201, 301) wenigstens eine Entlüftungsöffnung (6, 11, 106, 206, 306) aufweist.

## Claims

1. A method of draining a fluid from a unit of a motor vehicle, wherein a drain opening of the unit is opened in a first step, so that most of the fluid can flow into a disposal container, characterized in that in a second step a small-volume collecting container (1, 101, 231, 301) is attached to the unit in the area of the drain opening so that a remaining amount of fluid can flow into the collecting container (1, 101, 201, 301) over a longer period of time.

2. A method according to Claim 1, characterized in that the collecting container is attached to the unit by a magnetic mounting device.

3. A method according to Claim 1, characterized in that the collecting container (1, 101, 201, 301) is inserted in a form-fitting manner into the drain opening of the unit.

4. A collecting container for carrying out the method according to Claim 1 and/or 3, wherein the collecting container (1, 101, 201) is a hollow body (2, 102, 202) with a connecting element (5, 105, 205) which projects outward for inserting into the drain opening of the unit, characterized in that the connecting element (105, 205) is provided with an outside thread (4, 127, 227) which can be screwed into a corresponding inside thread of the drain opening of the unit.

5. A collecting container according to Claim 4, characterized in that the connecting element (5) is formed by a pipe connection (3) molded in one piece onto the hollow body (2).

6. A collecting container according to Claim 4, characterized in that the connecting element (105) is a bolt (123) which passes through the hollow body (102) and has a hollow end section (126) with an outside thread (127) for screwing it into the drain opening of the

7. A collecting container according to Claim 4, characterized in that the connecting element (205) is formed by a torsionally rigid hose (241) on whose end section (226) is an outside thread (227) for screwing it into the drain opening of the unit.

8. A collecting container according to Claim 4, characterized by a cylindrical hollow body (102, 202, 302) on whose one end face (cover 122, 222, 322) is arranged the connecting element (105, 205, 305).

9. A collecting container according to Claim 8, characterized in that the end face is designed as a removable cover (322).

10. A collecting container according to at least one of Claims 1 through 9, characterized in that at least one device (handle 7, 107, 207, 307) is provided on the outside surface of the hollow body (2, 102, 202, 302) for handling the collecting container (1, 101, 201; 301).

11. A collecting container according to at least one of Claims 4 through 10, characterized in that a device (8, 125, 208) for attaching a screw tool is provided on the outside surface of the hollow body (2, 102, 202, 302).

12. A collecting container according to at least one of the preceding Claims 4 through 11, characterized in that the collecting container (1, 101, 201, 301) has at least one vent opening (6, 11, 106, 206, 306).

## Revendications

1. Procédé pour retirer un lubrifiant ou un carburant d'un groupe équipant un véhicule à moteur, selon lequel dans un premier temps, on ouvre un orifice d'échappement du groupe de manière à ce que la plus grande partie du lubrifiant ou carburant puisse s'écouler dans un récipient d'évacuation, caractérisé en ce que dans un deuxième temps, on fixe un récipient de rétention (1, 101, 201, 301) à la hauteur de l'orifice d'échappement de manière à ce que le lubrifiant ou carburant restant puisse finir de s'écouler dans le récipient de rétention (1, 101, 201, 301) pendant un laps de temps plus long.

2. Procédé selon la revendication 1 caractérisé en ce que le récipient de rétention est fixé au groupe au moyen d'un dispositif de maintien magnétique.

3. Procédé selon la revendication 1 caractérisé en ce que le récipient de rétention (1, 101, 201, 301) est logé en engagement positif de forme dans l'orifice d'évacuation du groupe.

4. Récipient de rétention pour l'application du procédé selon la revendication 1 et/ou 3, ce récipient (1, 101, 201) étant un corps creux (2, 102, 202) pourvu d'un élément de fixation (5, 105, 205) décalé vers l'extérieur et destiné à être logé dans l'orifice d'évacuation du groupe, caractérisé en ce que l'élément de fixation (105, 205) est pourvu d'un filetage mâle (4, 127, 227) pouvant être vissé dans un filet femelle correspondant de l'orifice d'évacuation du groupe.

5. Récipient de rétention selon la revendication 4 caractérisé en ce que l'élément de fixation (5) est formé par une tubulure (3) moulée d'un seul bloc sur le corps creux (2).

6. Récipient de rétention selon la revendication 4 caractérisé en ce que l'élément de fixation (105) est une vis (123) traversant le corps creux (102) et dont la section finale (126) de forme creuse présente un filetage mâle (127) permettant le vissage dans l'orifice d'évacuation du groupe.

7. Récipient de rétention selon la revendication 4 caractérisé en ce que l'élément de fixation (205) est formé par un tuyau souple (241) rigide à la torsion sur la section finale (226) duquel on a prévu un filetage mâle (227) pour le vissage dans l'orifice d'évacuation du groupe.

8. Récipient de rétention selon la revendication 4 caractérisé par un corps creux (102, 202, 302) cylindrique sur l'un des fronts (couvercle 122, 222, 322) duquel est disposé l'élément de fixation (105, 205, 305).

9. Récipient de rétention selon la revendication 8 caractérisé en ce que le front se présente comme un couvercle amovible (322).

10. Récipient de rétention selon au moins une des revendications 1 à 9 caractérisé en ce que sur la surface extérieure du corps creux (2, 102, 202, 302), on a prévu au moins un dispositif (poignée 7, 107, 207, 307) permettant le maniement du récipient de rétention (1, 101, 201, 301).

11. Récipient de rétention selon au moins une des revendications 4 à 10 caractérisé en ce que sur la surface extérieure du corps creux (2, 102, 202, 302), on a prévu un dispositif (8, 125, 208) servant d'embase à un outil de vissage.

12. Récipient de rétention selon au moins une des revendications 4 à 11 caractérisé en ce que le récipient de rétention (1, 101, 201, 301) présente au moins un évent (6, 11, 106, 206, 306).
